# FASCICULE DE BREVET EUROPEEN

(11) **EP 1 982 783 B1**
(45) Date de publication et mention de la délivrance du brevet: **24.03.2010**
(21) Numéro de dépôt: 08103396.1
(22) Date de dépôt: 04.04.2008
(51) Int. Cl.: B23B 35/00, B23Q 5/32, G05B 19/404

(54) **Machine d'usinage**
Bearbeitungsmaschine
Machining machine

(30) Priorité: 17.04.2007 FR 0754515
(43) Date de publication de la demande: 22.10.2008
(73) Titulaire: Cooper Power Tools SAS, 77330 Ozoir la Ferrière (FR)
(72) Inventeur: Jaillon, Jacques, 93130 Noisy le Sec (FR); Galand, Jérôme, 77340 Pontault Combault (FR)
(74) Mandataire: Domenego, Bertrand

(56) Documents cités:
- FR-A- 2 873 315
- GB-A- 2 105 622
- GB-A- 2 245 995
- US-A- 4 688 970

## Description

La présente invention concerne une machine d'usinage, du type comprenant :
- un carter,
- une broche porte-outil s'étendant le long d'un axe et destinée à porter un outil d'usinage,
- un mécanisme d'entraînement de la broche porte-outil comprenant :
   - un premier organe d'entraînement en rotation de la broche autour de son axe par rapport au carter,
   - un deuxième organe d'entraînement en translation de la broche le long de son axe par rapport au carter, le deuxième organe d'entraînement étant vissé sur un tronçon fileté de la broche de sorte que la broche avance ou recule le long de son axe en fonction de la vitesse relative de rotation entre le premier organe et le deuxième organe.
- un premier moteur relié au mécanisme d'entraînement pour faire tourner le premier organe d'entraînement,
- un deuxième moteur relié au mécanisme d'entraînement pour faire tourner le deuxième organe d'entraînement,
- une unité de pilotage pour commander le premier moteur et le deuxième moteur.

L'invention s'applique par exemple à la construction aéronautique.

US 4,688,970 décrit une machine selon le préambule de la revendication 1.

Le document FR-2 873 315 décrit une machine de perçage d'un alésage possédant un mécanisme d'entraînement dit "à avance mécanique" en français ou "positive feed drill" en anglais. Un moteur unique assure alors, via le mécanisme d'entraînement, l'entraînement de la broche en rotation autour de son axe et simultanément son avance ou son recul par translation le long de son axe.

Les entraînements en translation et en rotation de la broche étant mécaniquement liés, l'avance de la broche par tour, c'est-à-dire l'amplitude du mouvement de translation de la broche par tour de broche est constante. Ainsi, les variations de la vitesse du moteur n'ont aucune incidence sur l'avance par tour. L'épaisseur des copeaux formés reste donc constante et favorise la qualité de surface et la précision des alésages percés par une telle machine.

Dans une variante, le déplacement du premier organe d'entraînement et le déplacement du deuxième organe d'entraînement peuvent être assurés par deux moteurs distincts asservis électroniquement l'un à l'autre. Les vitesses de rotation du premier organe d'entraînement et du deuxième organe d'entraînement sont alors liées afin d'établir une avance constante de la broche par tour.

Si de telles machines s'avèrent généralement satisfaisantes, leur utilisation pour percer des alésages dans des éléments composés de plusieurs couches de matériaux différents peut être délicate. En effet, à chacun de ses matériaux correspondra une vitesse optimale de rotation de l'outil de coupe ainsi qu'une avance par tour optimale.

Si la machine de perçage peut donc être réglée pour satisfaire aux conditions optimales de perçage d'une des couches, le perçage des autres couches s'effectuera dans des conditions non optimales, ce qui conduit à des alésages de qualités dégradées et/ou à des temps de perçage longs.

Un but de l'invention est donc de résoudre ces problèmes en fournissant une machine qui permette d'usiner avec une qualité satisfaisante des composants de plusieurs couches de matériaux, et ce en un temps réduit.

A cet effet, l'invention a pour objet une machine du type précité, caractérisé en ce que l'unité de pilotage est apte à commander de manière indépendante le premier moteur et le deuxième moteur afin de régler indépendamment la vitesse de rotation du premier organe d'entraînement et la vitesse de rotation du deuxième organe d'entraînement.

Selon des modes particuliers de réalisation, la machine comporte l'une ou plusieurs des caractéristiques suivantes, prise(s) isolément ou selon toutes les combinaisons techniquement possibles :
- l'unité de pilotage est apte à piloter le premier moteur et le deuxième moteur de telle sorte que le rapport entre la vitesse de rotation du premier organe et la vitesse de rotation du deuxième organe est réglable ;
- le premier moteur et le deuxième moteur sont électriques, la machine comprenant au moins un capteur de mesure d'une grandeur représentative du couple fourni par au moins l'un des moteurs pour modifier la vitesse de rotation d'au moins l'un des organes d'entraînement ;
- la grandeur représentative du couple est une intensité du courant électrique délivré au dit moteur ;
- des programmes de pilotage du premier moteur et du deuxième moteur sont stockés dans l'unité de pilotage, les programmes étant adaptés pour que l'unité de pilotage commande la rotation du premier moteur et du deuxième moteur en fonction de caractéristiques des matériaux et/ou de l'usinage à réaliser ;
- les programmes sont adaptés pour que l'unité de pilotage commande la rotation du premier moteur et du deuxième moteur pour modifier la vitesse de rotation d'au moins l'un des organes d'entraînement en fonction d'une variation de la grandeur caractéristique ;
- le premier moteur comporte un premier arbre de sortie apte à faire tourner le premier organe d'entraînement et le deuxième moteur comporte un deuxième arbre de sortie apte à faire tourner le deuxième organe d'entraînement, et dans laquelle le premier arbre et le deuxième arbre sont engagés l'un dans l'autre ;
- un module comporte le premier moteur et le deuxième moteur, le module étant monté de manière amovible sur le carter ;
- l'unité de pilotage est apte à commander le premier moteur et le deuxième moteur de telle sorte que :
   - le premier organe a une vitesse de rotation constante,
   - le deuxième organe a une vitesse de rotation dont la valeur instantanée varie autour d'une valeur moyenne ;
- la machine est apte à modifier la vitesse de rotation d'au moins l'un des organes d'entraînement en fonction du résultat d'une comparaison entre une valeur de la grandeur représentative du couple fourni par au moins l'un des moteurs et mesuré par le capteur de mesure, par rapport à une valeur prédéterminée stockée dans l'unité de pilotage ;
- la grandeur représentative du couple est une intensité du courant électrique délivrée au dit moteur ;
- la machine est une machine de perçage d'un alésage, la broche étant destinée à porter un outil de perçage d'un alésage.

L'invention a également pour objet un procédé d'usinage, caractérisé en ce qu'il est réalisé au moyen d'une machine telle que décrite ci-dessus.

Selon des modes particuliers de réalisation, le procédé présente l'une ou plusieurs des caractéristiques suivantes, prise(s) isolément ou selon toutes les combinaisons techniquement possibles :
- le procédé comprend une étape au cours de laquelle l'unité de pilotage commande le premier moteur et le deuxième moteur de telle sorte que :
   - le premier organe a une vitesse de rotation constante,
   - le deuxième organe a une vitesse de rotation dont la valeur instantanée varie autour d'une valeur moyenne ;
- l'unité de pilotage est apte à piloter le premier moteur et le deuxième moteur de telle sorte que le rapport entre la vitesse de rotation du premier organe et la vitesse de rotation du deuxième organe est réglable, le premier moteur et le deuxième moteur étant électriques, la machine comprenant au moins un capteur de mesure d'une grandeur représentative du couple fourni par au moins l'un des moteurs pour modifier la vitesse de rotation d'au moins l'un des organes d'entraînement, le procédé comprenant les étapes suivantes :
   - mesure par le capteur de mesure d'une grandeur représentative du couple fourni par au moins l'un des moteurs,
   - comparaison de la valeur de la grandeur représentative par rapport à une valeur prédéterminée stockée dans l'unité de pilotage,
   - modification de la vitesse de rotation d'au moins l'un des organes d'entraînement en fonction du résultat de la comparaison ;
- la grandeur représentative du couple est une intensité du courant électrique délivré au dit moteur ;
- le procédé est un procédé de perçage d'un alésage.

L'invention sera mieux comprise à la lecture de la description qui va suivre, donnée uniquement à titre d'exemple, et faite en se référant aux dessins annexés, sur lesquels :
- la figure 1 est une vue schématique en coupe latérale d'une machine selon l'invention,
- la figure 2 est une vue agrandie de la partie II de la figure 1 ;
- la figure 3 est un diagramme illustrant l'unité de pilotage de la machine de la figure 1 ;
- la figure 4 est un graphique illustrant différentes phases d'un procédé de perçage utilisant la machine de la figure 1 ; et
- la figure 5 est un graphique illustrant une autre variante d'un procédé de perçage selon l'invention ; et
- la figure 6 est un schéma de principe illustrant une variante de réalisation de l'invention.

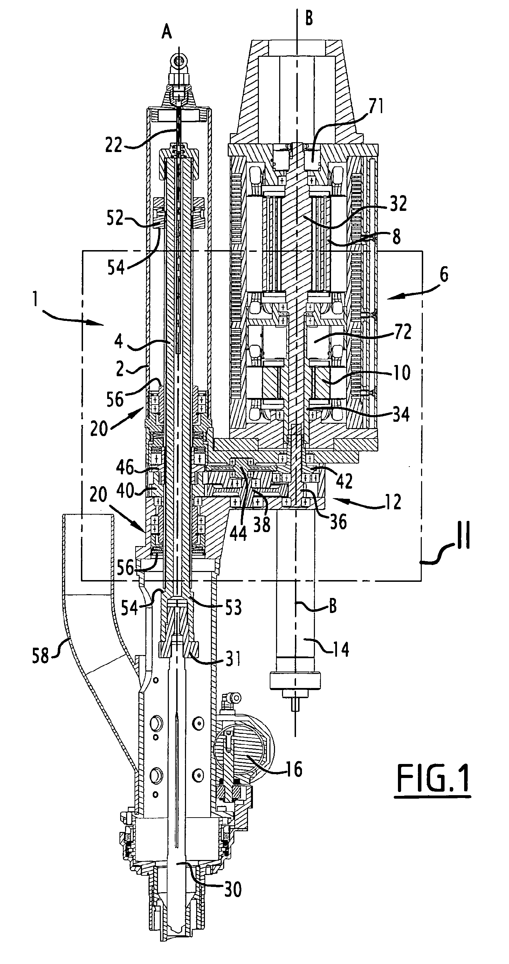

La figure 1 illustre une machine 1 d'usinage portative qui comprend principalement :
- un carter 2,
- une broche 4 porte-outils s'étendant suivant un axe vertical A,
- un module 6 comprenant un premier moteur électrique 8 et un deuxième moteur électrique 10, et
- un mécanisme 12 d'entraînement de la broche 4 reliant mécaniquement la broche 4 au premier moteur 8 et au deuxième moteur 10,
- une poignée 14 de portage de la machine 1, et
- un élément 16 de fixation sur un support (non représenté) de la machine 1.

La broche 4 est reçue dans le carter 2 de manière mobile en rotation autour de son axe A et en translation le long de cet axe A. A cet effet, le carter 2 est muni de moyens de guidage de la broche 4 comprenant deux paliers 20 d'axe A et une tige interne 22 d'axe A, destinée à véhiculer le lubrifiant de perçage.

La tige interne 22 est fixe par rapport au carter 2 et reçue librement à l'intérieur de la broche 4.

Afin de pouvoir assurer le perçage d'alésages, un outil 30 de perçage sous forme d'un foret est monté de manière amovible à l'extrémité inférieure 31 de la broche 4.

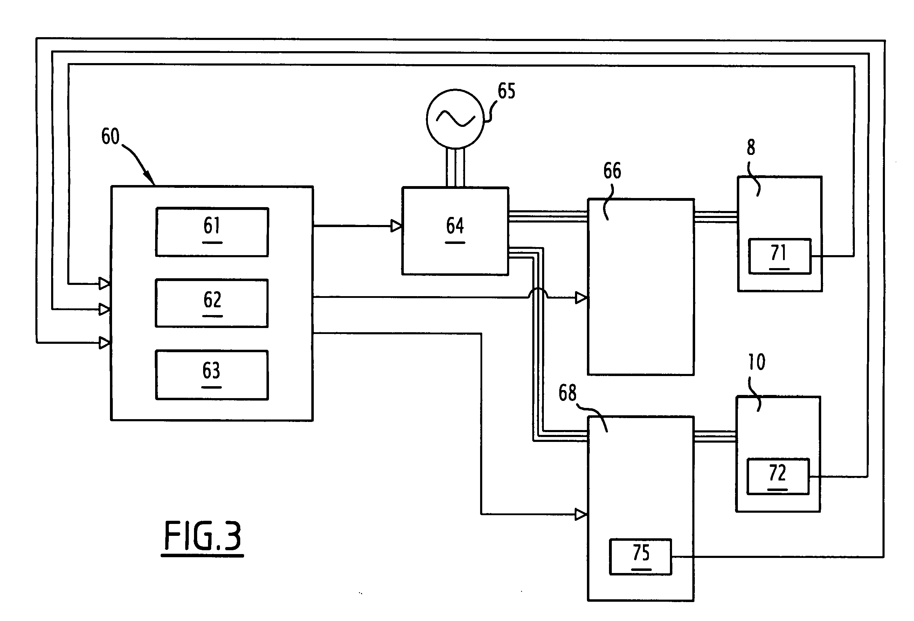

Le premier moteur 8 est disposé au-dessus du deuxième moteur 10 (en référence à l'orientation de la machine 1 sur les figures 1 et 3). Le premier moteur 8 comprend un arbre de sortie 32, dit premier arbre de sortie 32, et le deuxième moteur 10 comprend un arbre de sortie 34, dit deuxième arbre de sortie 34.

Le premier arbre 32 traverse le deuxième moteur 10. A cet effet, le deuxième arbre 34 est creux et le premier arbre 32 est reçu à l'intérieur du deuxième arbre 34. Le premier arbre 32 et le deuxième arbre 34 sont ainsi engagés l'un dans l'autre de manière coaxiale mais peuvent tourner librement l'un par rapport à l'autre.

Le mécanisme d'entraînement 12 comprend les éléments suivants :
- un premier arbre d'entrée 36 d'axe B reçu dans le premier arbre de sortie 32 de manière coaxiale et de telle sorte qu'il est solidaire en rotation de l'arbre 32,
- un premier pignon intermédiaire 38 qui engrène avec le premier arbre d'entrée 36,
- un premier pignon d'entraînement 40 qui engrène avec le premier pignon intermédiaire 38,
- un deuxième arbre d'entrée 42 d'axe B reçu dans le deuxième arbre de sortie 34 de manière coaxiale et de telle sorte qu'il est solidaire en rotation de l'arbre 34,
- un deuxième pignon intermédiaire 44 disposé au-dessus du premier pignon intermédiaire 38 et qui engrène avec le deuxième arbre d'entrée 42, et
- un deuxième pignon d'entraînement 46 surmontant le premier pignon d'entraînement 40 et qui engrène avec le deuxième pignon intermédiaire 44, le premier pignon d'entraînement 40 et le deuxième pignon d'entraînement 46 étant d'axe A.

Les paliers 20 sont disposés de part et d'autre des pignons d'entraînement 40, 46.

Le premier arbre d'entrée 36 et le deuxième arbre d'entrée 42 sont engagés l'un dans l'autre de manière coaxiale et peuvent tourner librement l'un par rapport à l'autre. De même, les pignons intermédiaires 38 et 44 peuvent tourner librement l'un par rapport à l'autre. Les arbres d'entrée 36 et 42 sont mobiles en rotation dans le carter 2 autour de l'axe B et sont fixes en translation le long de l'axe B.

Le premier arbre d'entrée 36 est plus long que le deuxième arbre d'entrée 42 et traverse le deuxième arbre d'entrée 42 de part en part.

Le module 6 comporte un dispositif de connexion libérable (non représenté) permettant la fixation du module 6 sur le carter 2, ainsi que le retrait du module 6. II s'agit par exemple d'une pince à vérin pneumatique, de type connu, ou encore de ventouses magnétiques. Dans l'exemple décrit, une fois ce dispositif de connexion libéré, on déplace le module 6 le long de l'axe B pour le séparer du carter 2.

La liaison entre le premier arbre d'entrée 36 et le premier arbre de sortie 32, et la liaison entre le deuxième arbre d'entrée 42 et le deuxième arbre de sortie 34 permettent toutes deux la translation des arbres de sortie 32, 34 le long de l'axe B par rapport au carter 2, de telle sorte que le module 6 est amovible du carter 2 par simple translation le long de l'axe B. Ces liaisons peuvent par exemple être réalisées grâce à des cannelures.

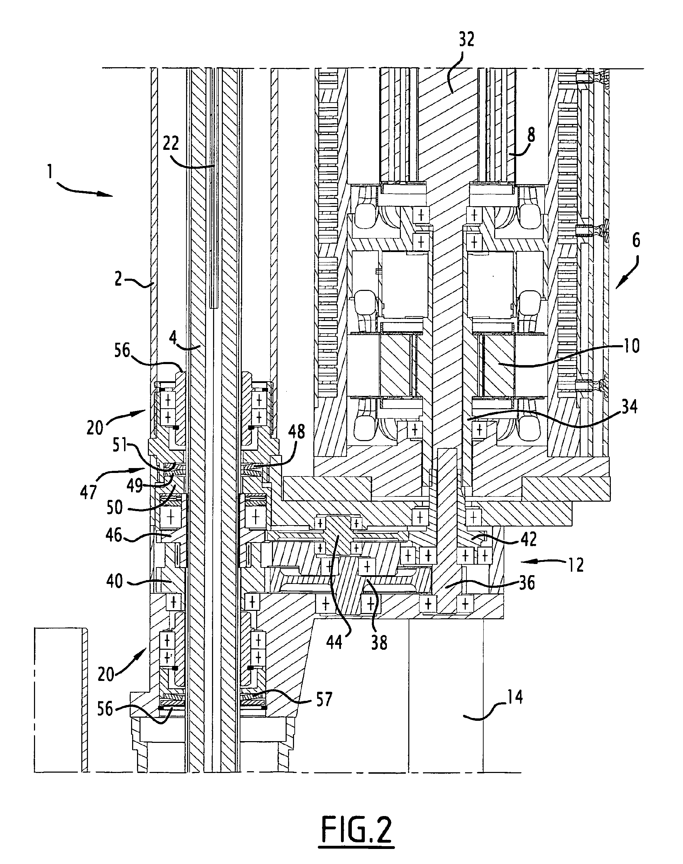

Les premiers pignons 38, 40 et le deuxième pignon intermédiaire 44 sont fixes en translation dans le carter 2. Ils sont uniquement mobiles en rotation suivant leurs axes respectifs. Le deuxième pignon d'entraînement 46, quant à lui, est mobile en rotation autour de l'axe A et légèrement mobile en translation le long de l'axe A pour permettre l'amortissement de la fin de course avant de la broche 4, comme expliqué ci-après. Néanmoins, lors du perçage ou fraisurage, le deuxième pignon d'entraînement 46 est dans la position illustrée sur les figures 1 et 2.

Le premier pignon d'entraînement 40 est enfilé sur la broche 4 et est solidaire en rotation de cette dernière. La broche 4 est mobile en translation par rapport au pignon 40 le long de l'axe A. Cette liaison entre la broche 4 et le premier pignon 40 est par exemple réalisée grâce à des cannelures.

Le deuxième pignon d'entraînement 46 comporte un filetage interne coopérant avec un filetage externe de la broche 4. Le deuxième pignon 46 est ainsi vissé, de manière connue, sur la broche 4.

Du fait de la liaison hélicoïdale entre la broche 4 et le deuxième pignon d'entraînement 46, le pignon 46 entraîne la broche 4 en translation le long de l'axe A en fonction de la vitesse relative de rotation entre le deuxième pignon d'entraînement 46 et la broche 4, c'est-à-dire en fonction de la vitesse relative de rotation entre le deuxième pignon d'entraînement 46 et le premier pignon d'entraînement 40.

Dans le cas où l'entraînement en rotation de la broche 4 est effectué dans le sens horaire, le pas de la liaison hélicoïdale entre la broche 4 et le deuxième pignon d'entraînement 46 est, dans l'exemple illustré, à gauche. De cette manière, le mouvement d'avance de la broche 4, c'est-à-dire son déplacement en translation vers le bas le long de l'axe A (sur les figures 1 et 2), est assuré lorsque la vitesse de rotation du deuxième pignon d'entraînement 46 est supérieure à la vitesse de rotation du premier pignon d'entraînement 40.

Inversement, le mouvement de recul de la broche 4, c'est-à-dire son déplacement en translation vers le haut le long de l'axe A (sur les figures 1 et 2), est obtenu lorsque la vitesse de rotation du deuxième pignon d'entraînement 46 est inférieure à la vitesse de rotation du premier pignon d'entraînement 40.

Les diamètres primitifs des pignons 38, 40, 44, 46 sont par exemple prévus de telle sorte que lorsque la vitesse de rotation du premier arbre de sortie 32 est égale à celle du deuxième arbre de sortie 34, la vitesse de rotation du deuxième pignon d'entraînement 46 est légèrement supérieure à celle du deuxième pignon d'entraînement 40 et la broche 4 est entraînée en translation vers le bas.

Le mécanisme d'entraînement 12 comprend en outre un mécanisme 47 (figure 2) d'appui axial sur le deuxième pignon d'entraînement 46. Ce mécanisme 47 comprend des moyens d'amortissement, sous forme de deux bagues élastiques supérieure 48 et inférieure 49, et une cage 50 d'appui sur le deuxième pignon 46.

Les deux bagues 48,49 sont montées en précontrainte l'une au-dessus de l'autre de manière coaxiale. La bague supérieure 48 prend appui sur une face arrière 51 du carter 2 tandis que la bague inférieure 49 appuie sur la bague 48.

La cage 50 est légèrement mobile en translation le long de l'axe A et fixe en rotation par rapport au carter 2. Elle reçoit le deuxième pignon d'entraînement 46 librement en rotation et en translation au moyen d'aiguilles de roulement. La cage 50 prend appui sur la bague inférieure 49.

Afin de limiter la course du mouvement d'avance de la broche 4 le long de l'axe A, la broche 4 comporte une butée arrière de fin de course 52 et une butée avant de fin de course 53.

Les butées 52, 53 sont solidaires de la broche 4 et comportent chacune une surface 54 de butée apte à coopérer avec une surface 56 respective.

Lors du perçage, le mécanisme d'appui 47 exerce une pression suffisante pour maintenir le deuxième pignon d'entraînement 46 dans la position illustrée sur les figures 1 et 2. La possibilité de débattement en translation du pignon 46, qui implique une déformation des bagues 48 et 49, permet d'amortir la fin de course avant de la broche 4. L'amortissement de la fin de course arrière est obtenu grâce à une bague élastique 57 (figure 3).

Le carter 2 comporte également une gaine 58 d'évacuation de copeaux formés lors d'une opération de perçage.

Comme illustré sur la figure 3, la machine 1 comporte en outre :
- une unité électronique de pilotage 60 apte à commander de manière indépendante le premier moteur 8 et le deuxième moteur 10, l'unité 60 comportant une mémoire 61, un écran 62 d'affichage et de saisie par toucher, et un processeur 63,
- un contacteur 64 relié à une source d'énergie électrique 65 et commandé par l'unité 60,
- un premier variateur 66 d'alimentation du premier moteur 8 en énergie électrique et de commande de la vitesse de rotation du premier moteur 8,
- un deuxième variateur 68 d'alimentation du deuxième moteur 10 en énergie électrique et de commande de la vitesse de rotation du deuxième moteur 10.

La source 65 fournit par exemple sous forme triphasée une tension alternative d'environ 400V.

Les moteurs 8, 10 sont par exemple de type « sans balai » en français ou « brushless » en anglais.

Le premier moteur 8 comporte un capteur 71 de mesure de la vitesse de rotation du premier arbre de sortie 32 et le deuxième moteur 10 comporte un capteur 72 de mesure de la vitesse de rotation du deuxième arbre de sortie 34.

Le premier variateur 66 et le deuxième variateur 68 sont reliés aux moteurs 8 et 10 et sont en outre reliés au contacteur 64 pour leur alimentation en énergie. Ils sont également reliés, tout comme le contacteur 64, à l'unité de pilotage 60 pour être commandés par cette dernière.

Le deuxième variateur 68 comprend un capteur 75 de mesure de l'intensité efficace du courant électrique délivré au deuxième moteur 10.

Chaque capteur 71, 72, 75 est relié à l'unité de pilotage 60 pour lui fournir des signaux représentatifs des valeurs mesurées.

L'unité de pilotage 60 est adaptée pour pouvoir commander la rotation du premier moteur 8 et du deuxième moteur 10 de manière indépendante afin de modifier la vitesse de rotation de la broche 4 et/ou l'avance par tour de la broche 4.

On rappelle que la vitesse de rotation de la broche 4 est égale à la vitesse de rotation du premier pignon d'entraînement 40 et dépend donc de la vitesse de rotation du premier arbre de sortie 32. L'avance par tour de la broche 4 est égale à la différence entre la vitesse de rotation du deuxième pignon d'entraînement 46 et la vitesse de rotation du premier pignon d'entraînement 40, divisée par la vitesse de rotation du premier pignon d'entraînement 40, le tout multiplié par le pas du filetage interne du deuxième pignon d'entraînement 46. Elle est par exemple exprimée en millimètres par tour de broche 4.

L'unité de pilotage 60 peut par exemple modifier la vitesse de rotation des pignons d'entraînement 40, 46 tout en maintenant constant le rapport entre la vitesse de rotation du premier pignon d'entraînement 40 et la vitesse de rotation du deuxième pignon d'entraînement 46. De cette manière, l'unité 60 modifie la vitesse de rotation de la broche 4 mais l'avance par tour de la broche 4 n'est pas modifiée.

L'unité 60 est également apte à modifier la vitesse de rotation du deuxième pignon d'entraînement 46 tout en maintenant constante la vitesse de rotation du premier pignon d'entraînement 40. Ainsi, la vitesse de rotation de la broche 4 n'est pas modifiée mais le rapport entre la vitesse de rotation du premier pignon d'entraînement 40 et la vitesse de rotation du deuxième pignon d'entraînement 46 est modifié. La vitesse de rotation de la broche 4 est donc constante mais l'avance par tour de la broche 4 est modifiée.

L'unité de pilotage 60 est également apte à modifier en même temps la vitesse de rotation de la broche 4 et l'avance par tour de la broche 4.

Les différentes possibilités sont de préférence utilisées grâce à des programmes de pilotage du premier moteur 8 et du deuxième moteur 10, qui sont stockés dans la mémoire 61 de l'unité de pilotage 60.

Ces programmes sont adaptés pour que l'unité 60 commande le fonctionnement du premier moteur 8 et du deuxième moteur 10 en fonction d'informations saisies par l'opérateur par l'intermédiaire de l'écran 62. Ces informations concernent par exemple le type de broche 4, et le nombre et la nature des couches de matériaux dans lesquelles le perçage doit être réalisé.

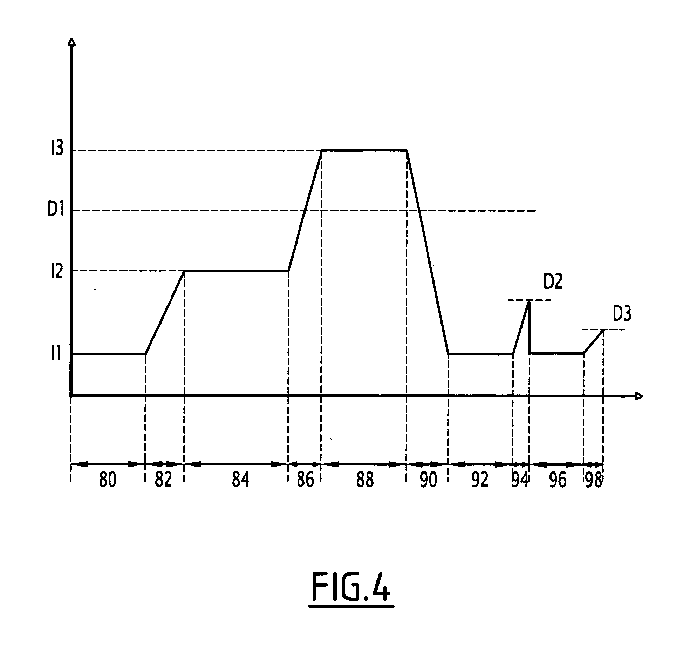

Le fonctionnement de la machine 1 va maintenant être décrit en référence à la figure 4 illustrant les variations de l'intensité efficace du courant électrique délivré au deuxième moteur 10 lors du perçage d'un élément composé de deux couches de matériaux différents, à savoir une couche composite à base de fibres de carbone et une couche d'aluminium.

Préalablement, l'opérateur a sélectionné le programme de pilotage adéquat en précisant grâce à l'écran 62 les caractéristiques de l'élément à percer, et notamment son nombre de couches et la nature de ces dernières, et l'unité de pilotage 60 assure alors automatiquement l'exécution du procédé décrit ci-dessous.

Dans l'exemple illustré, le couple fourni par l'arbre de sortie 34 du deuxième moteur 10 est sensiblement proportionnel à l'intensité efficace du courant électrique fourni par le deuxième variateur 68.

Sur la figure 4, le temps est représenté sur l'axe des abscisses tandis que l'intensité efficace du courant électrique est représentée sur l'axe des ordonnées.

Au départ, la broche 4 est reculée dans le carter 2 et le foret 30 est espacé de l'élément à percer. La butée avant 53 est appuyée sur la surface 56 correspondante.

Dans une première phase 80, le foret 30 avance vers l'élément à percer sans être en contact avec l'élément à percer et l'intensité efficace fournie a une valeur sensiblement constante I1.

Lors de l'attaque de la première couche de matériau par le foret 30, le couple fourni par le deuxième arbre de sortie 34 augmente et l'intensité du courant délivré au deuxième moteur 10 augmente linéairement, ce qui est illustré par la deuxième phase 82.

Dans une troisième phase 84, l'intensité efficace se stabilise autour d'une valeur sensiblement constante 12.

Dans l'exemple illustré, le matériau de la deuxième couche est plus dur que celui de la première couche. Ainsi, lors de l'attaque de la deuxième couche de matériau, qui correspond à la quatrième phase 86, l'intensité efficace du courant augmente linéairement et franchit une valeur seuil D1 stockée dans la mémoire 61. Lorsque l'unité de pilotage 60 détecte grâce au capteur 75 un tel franchissement, l'unité 60 commande, dans l'exemple illustré, une vitesse de rotation de la broche 4 plus faible tout en maintenant l'avance par tour de la broche 4 constante.

Comme on peut le constater sur la figure 4, l'intensité efficace du courant délivré au deuxième moteur 10 continue d'augmenter linéairement. En effet, même si la vitesse de rotation du deuxième moteur 10 et donc la tension fournie au deuxième moteur 10 ont diminué, le couple fourni par le deuxième arbre de sortie 34 et donc l'intensité efficace du courant délivré au deuxième moteur 10 continuent d'augmenter.

L'intensité efficace du courant se stabilise ensuite dans une cinquième phase 88 autour d'une valeur sensiblement constante 13.

Lors de la sortie de l'extrémité du foret 30 de l'élément à percer, l'intensité efficace du courant délivré au deuxième moteur 10 diminue progressivement dans une sixième phase 90 jusqu'à atteindre une valeur sensiblement égale à 11.

La broche 4 continue alors son mouvement d'avance pendant une septième phase 92 jusqu'à ce que la butée de fin de course 52 vienne en appui contre la surface 56 correspondante.

Cet appui conduit à une nouvelle augmentation de l'intensité efficace du courant délivré au deuxième moteur 10 pendant une septième phase 94, comme illustré sur la figure 4.

Lorsque la valeur de l'intensité mesurée par le deuxième capteur 75 dépasse une valeur de fin de course avant D2, l'unité de pilotage 60 commande automatiquement l'arrêt du deuxième moteur 10. Le premier arbre de sortie 32 du premier moteur 8, en revanche, continue à tourner à la même vitesse.

Pendant cette huitième phase 96, le deuxième pignon d'entraînement 46 est ainsi bloqué en rotation tandis que le premier pignon d'entraînement 40 continue à tourner, ce qui se traduit par un mouvement de recul de la broche 4. L'intensité efficace du courant électrique fourni au deuxième moteur 10 est alors sensiblement constante.

De la même façon que pour la fin de course avant, lorsque la valeur de l'intensité efficace du courant délivré au deuxième moteur 10 mesurée par le capteur 75 dépasse une valeur de fin de course arrière D3, l'unité 60 commande l'arrêt du premier moteur 8.

En effet, comme pour la fin de course avant, l'appui de la butée de fin de course 53 sur la surface correspondante 56 entraîne une augmentation de l'intensité efficace du courant électrique délivré au deuxième moteur 10.

On comprend donc que l'unité de pilotage 60 est apte à modifier la vitesse de rotation de la broche 4 et l'avance par tour de la broche 4 de manière indépendante en fonction de l'intensité efficace du courant électrique fourni au deuxième moteur 10 et donc du couple fourni par le deuxième moteur 10.

La machine 1 est ainsi apte à s'adapter à des éléments constitués de plusieurs couches de matériaux différents. Pour chaque type de matériau, l'unité 60 commande une vitesse de rotation de la broche 4 optimale et une avance par tour de la broche 4 optimale. Ces valeurs optimales sont stockées dans la mémoire 61 et sont sélectionnées par les programmes de pilotage en fonction des informations saisies par l'opérateur au moyen de l'écran 62.

La machine 1 peut également permettre l'évacuation des copeaux formés pour l'obtention d'un alésage de très grande précision.

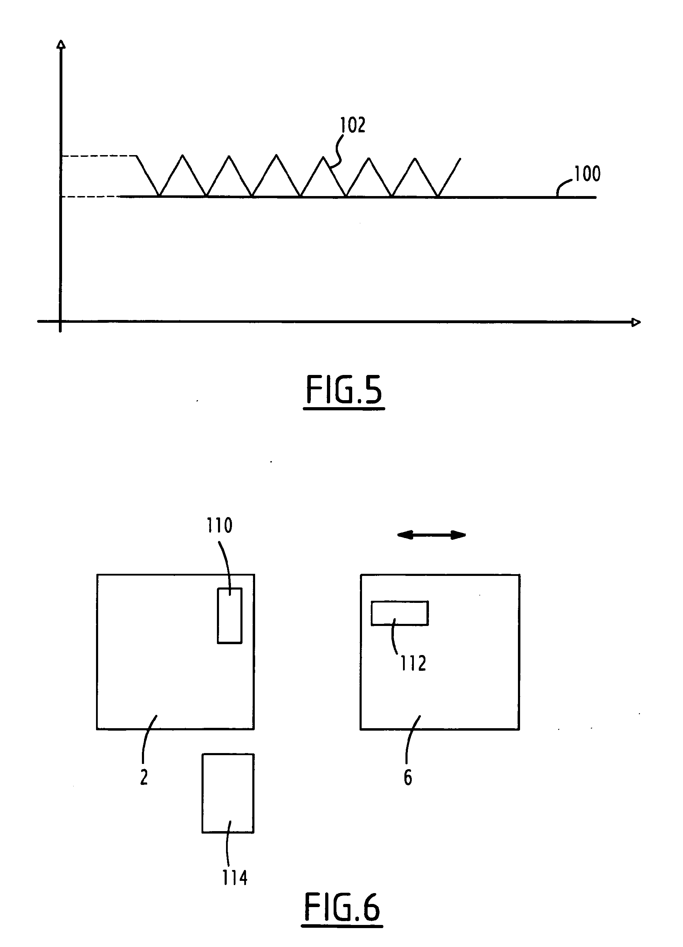

En effet, et comme illustré par la figure 5, l'unité de pilotage 60 peut commander le deuxième moteur 10 de telle sorte que la vitesse de rotation du deuxième pignon d'entraînement 46 varie autour d'une valeur moyenne supérieure à la vitesse de rotation du premier pignon d'entraînement 40.

Sur la figure 5, l'axe des abscisses représente le temps tandis que l'axe des ordonnées correspond à la vitesse de rotation. La vitesse de rotation du premier pignon d'entraînement 40 est représentée par une première courbe 100 et la vitesse de rotation du deuxième pignon d'entraînement 46 est représentée par une deuxième courbe 102.

Au mouvement général d'avance de la broche 4 se combine alors un mouvement oscillatoire de translation de la broche 4 le long de l'axe A. Ce mouvement oscillatoire a une amplitude sensiblement constante. Cette amplitude est relativement faible de sorte que la broche 4 reste à l'intérieur de l'alésage au cours de l'opération de perçage.

Typiquement, l'amplitude d'oscillation est sensiblement égale à la translation le long de l'axe A de la broche 4, au cours d'un tour du premier pignon d'entraînement 40 par rapport au deuxième pignon d'entraînement 46, c'est-à-dire au pas de filetage interne du deuxième pignon d'entraînement 46 et du filetage externe de la broche 4.

Dans l'exemple illustré sur la figure 5, l'avance par tour de la broche 4 oscille entre une valeur positive et une valeur nulle.

Le mouvement oscillatoire d'avance de la broche va provoquer, à chaque diminution de l'avance par tour de la broche 4, une rupture des copeaux formés.

Ce fractionnement des copeaux formés va faciliter d'une part leur évacuation et d'autre part l'obtention d'un alésage de très grande précision avec un état de surface de grande qualité, même pour de très grandes profondeurs.

En outre, la fréquence de variation du mouvement d'avance de la broche 4 est réglable par l'unité de pilotage 60. Dans l'exemple illustré sur la figure 5, la courbe 102 est une courbe en dents de scie, mais il peut s'agir d'une courbe sinusoïdale et de tout autre type de courbe appropriée.

En variante, l'unité de pilotage 60 peut permettre d'obtenir le même résultat en mettant en oeuvre un procédé de débourrage tel que celui décrit dans le document FR-A-2 873 315. Lorsque le couple fourni par le deuxième moteur 10 et donc l'intensité efficace mesurée par le capteur 75 dépasse une valeur prédéterminée, l'unité de pilotage 60 commande alors un mouvement de recul rapide de la broche 4 suffisant pour sortir complètement le foret 30 de l'alésage en cours de perçage. Elle commande ensuite un mouvement d'avance rapide égal au mouvement de recul précédent pour revenir en position de perçage avant de commander un mouvement d'avance plus lent pour le perçage.

Les mesures décrites ci-dessus pour évacuer les copeaux et assurer l'obtention d'alésage de bonne qualité peuvent être mises en oeuvre au cours d'un procédé de perçage tel que celui décrit par référence à la figure 4 ou seulement pendant certaines de ses phases, ou encore lorsque l'intensité efficace du courant électrique d'alimentation du deuxième moteur 10 dépasse une valeur prédéterminée.

L'unité de pilotage 60 peut également être adaptée pour mettre en oeuvre un procédé d'arrêt d'urgence consistant à arrêter les deux moteurs 8,10 lorsque l'intensité efficace du courant délivré au deuxième moteur 10 dépasse une valeur prédéterminée.

Grâce à la structure du module 6, et notamment à l'engagement du premier arbre de sortie 32 dans le deuxième arbre de sortie 34, le module 6 a un encombrement limité.

En outre, grâce au dispositif de connexion libérable, le module 6 peut être séparé rapidement du carter 2 et remplacé par un autre module.

D'autres modes de réalisation que celui décrit précédemment peuvent également être envisagés. Ainsi, les capteurs 71, 72 peuvent également fournir à l'unité 60 un signal représentatif du nombre de tours effectués par les moteurs respectifs 8, 10. La différence entre le nombre de tours effectués par le premier moteur 8 et par le deuxième moteur 10 est comparée à une valeur prédéterminée stockée dans la mémoire 61 et l'unité 60 commande l'arrêt du mouvement d'avance ou du mouvement de recul de la broche 4. Les butées de fin de course 52 et 53 peuvent donc être supprimées.

De même, les moteurs 8 et 10 utilisés ne sont pas nécessairement des moteurs électriques.

Dans les exemples décrits ci-dessus, on utilise les signaux fournis par un capteur de l'intensité efficace du courant électrique délivré au deuxième moteur 10. Plus généralement, on peut utiliser d'autres grandeurs que l'intensité, par exemple des grandeurs représentatives des couples fournis par un ou les moteurs 8, 10. On peut ainsi utiliser des jauges de contraintes fournissant des mesures du ou des couples fournis. Dans l'exemple décrit ci-dessus, un capteur 75 était prévu sur le deuxième moteur 10 mais il également possible de prévoir un capteur de mesure d'une grandeur représentative du couple fourni par le premier moteur 8, notamment pour détecter la ou les fins de course de la broche 4.

Dans l'exemple décrit ci-dessus, la sélection des programmes de pilotage s'effectue en fonction du nombre de couches et des caractéristiques des matériaux des différentes couches de l'élément à percer. Dans d'autres variantes, on peut également prendre en compte des caractéristiques de l'alésage à percer.

En variante, la machine 1 peut être une machine pour effectuer d'autres types d'usinage, notamment des fraisages. A cet effet, la broche 4 est par exemple équipée de fraises.

En variante, et comme illustré par la figure 6, le carter 2 comprend une puce d'identification RFID 110 (Radio Frequency Identification), par exemple logée dans le carter 2, et le module 6 comprend un système d'identification à distance 112 du carter 2 par lecture électromagnétique de la puce RFID 110. Ce système 112 est par exemple logé dans le module 6. Le module 6 et son unité de pilotage 60 sont ainsi aptes à identifier le carter 2 et à exécuter les programmes de fonctionnement spécifiques au carter 2. Le même module 6 est ainsi utilisable avec différents carters 2 possédant chacun un mécanisme d'entraînement 12 différent, si bien que le coût de la machine 1 est relativement faible.

En variante, une unité portable d'écriture 114 permet d'enregistrer dans la puce RFI D 110 différents paramètres caractéristiques du mécanisme d'entraînement 12. Ces différents paramètres peuvent être exploités par les programmes de fonctionnement de l'unité de pilotage 60. Il s'agit par exemple de valeurs de vitesses de rotation et d'avance préconisées.

En variante encore, le système d'identification 112 est apte à fonctionner en écriture avec la puce RFID 110, de façon à stocker sur la puce RFID 110 les informations précitées et/ou des paramètres de traçabilité.

## Revendications

1. Machine (1) d'usinage, du type comprenant :
- un carter (2),
- une broche (4) porte-outil s'étendant le long d'un axe (A) et destinée à porter un outil d'usinage (30),
- un mécanisme (12) d'entraînement de la broche (4) porte-outil comprenant :
• un premier organe (40) d'entraînement en rotation de la broche (4) autour de son axe (A) par rapport au carter (2),
• a un deuxième organe (46) d'entraînement en translation de la broche (4) le long de son axe (A) par rapport au carter (2), le deuxième organe d'entraînement (46) étant vissé sur un tronçon fileté de la broche (4) de sorte que la broche (4) avance ou recule le long de son axe (A) en fonction de la vitesse relative de rotation entre le premier organe (40) et le deuxième organe (46),
- un premier moteur (8) relié au mécanisme d'entraînement (12) pour faire tourner le premier organe d'entraînement (40),
- un deuxième moteur (10) relié au mécanisme d'entraînement (12) pour faire tourner le deuxième organe d'entraînement (46),
- une unité (60) de pilotage pour commander le premier moteur (8) et le deuxième moteur (10), l'unité de pilotage (60) étant apte à commander de manière indépendante le premier moteur (8) et le deuxième moteur (10) afin de régler indépendamment la vitesse de rotation du premier organe d'entraînement (40) et la vitesse de rotation du deuxième organe d'entraînement (46),
**caractérisée en ce que** le premier moteur (8) comporte un premier arbre (32) de sortie apte à faire tourner le premier organe d'entraînement (40) et le deuxième moteur (10) comporte un deuxième arbre (34) de sortie apte à faire tourner le deuxième organe d'entraînement (46) et dans laquelle le premier arbre (32) et le deuxième arbre (34) sont engagés l'un dans l'autre.

2. Machine (1) selon la revendication 1, comprenant un module (6) qui comporte le premier moteur (8) et le deuxième moteur (10), le module (6) étant monté de manière amovible sur le carter (2).

3. Machine (1) selon la revendication 2, dans laquelle le module (6) comporte un dispositif de connexion libérable permettant la fixation du module (6) sur le carter (2), ainsi que le retrait du module (6).

4. Machine (1) selon la revendication 2 ou 3, dans laquelle le module (6) est amovible du carter (2) par simple translation.

5. Machine (1) selon l'une quelconque des revendications 2 à 4, dans laquelle le carter (2) comprend une puce d'identification radiofréquence (110) et le module (6) comprend un système d'identification (112) à distance du carter (2) par lecture de la puce d'identification radiofréquence (110).

6. Machine (1) selon l'une quelconque des revendications précédentes, dans laquelle l'unité de pilotage (60) est apte à piloter le premier moteur (8) et le deuxième moteur (10) de telle sorte que le rapport entre la vitesse de rotation du premier organe (40) et la vitesse de rotation du deuxième organe (46) est réglable.

7. Machine (1) selon l'une quelconque des revendications précédentes, dans laquelle le premier moteur (8) et le deuxième moteur (10) sont électriques, la machine (1) comprenant au moins un capteur (75) de mesure d'une grandeur représentative du couple fourni par au moins l'un des moteurs (8, 10) pour modifier la vitesse de rotation d'au moins l'un des organes d'entraînement (40, 46).

8. Machine (1) selon la revendication 7, dans laquelle la grandeur représentative du couple est une intensité du courant électrique délivré au dit moteur (8, 10).

9. Machine (1) selon l'une quelconque des revendications précédentes, dans laquelle des programmes de pilotage du premier moteur (8) et du deuxième moteur (10) sont stockés dans l'unité de pilotage (60), les programmes étant adaptés pour que l'unité de pilotage (60) commande la rotation du premier moteur (8) et du deuxième moteur (10) en fonction de caractéristiques des matériaux et/ou de l'usinage à réaliser.

10. Machine (1) selon la revendication 7 ou 8 prise ensemble avec la revendication 9, dans laquelle les programmes sont adaptés pour que l'unité de pilotage (60) commande la rotation du premier moteur (8) et du deuxième moteur (10) pour modifier la vitesse de rotation d'au moins l'un des organes d'entraînement (40, 46) en fonction d'une variation de la grandeur caractéristique.

11. Machine (1) selon l'une quelconque des revendications précédentes, dans laquelle l'unité de pilotage (60) est apte à commander le premier moteur (8) et le deuxième moteur (10) de telle sorte que :
- le premier organe (40) a une vitesse de rotation constante,
- le deuxième organe (46) a une vitesse de rotation dont la valeur instantanée oscille autour d'une valeur moyenne.

12. Machine (1) selon l'une quelconque des revendications 6 à 10, dans laquelle la machine (1) est apte à modifier la vitesse de rotation d'au moins l'un des organes d'entraînement (40, 46) en fonction du résultat d'une comparaison entre une valeur de la grandeur représentative du couple fourni par au moins l'un des moteurs (8, 10) et mesuré par le capteur de mesure (75), par rapport à une valeur prédéterminée stockée dans l'unité de pilotage (60).

13. Machine (1) selon la revendication 12, dans laquelle la grandeur représentative du couple est une intensité du courant électrique délivrée au dit moteur.

14. Machine (1) selon l'une quelconque des revendications précédentes, la machine étant une machine de perçage d'un alésage, la broche (4) étant destinée à porter un outil de perçage d'un alésage.

15. Procédé d'usinage, **caractérisé en ce qu'**il est réalisé au moyen d'une machine (1) selon l'une quelconque des revendications précédentes.

16. Procédé selon la revendication 15, le procédé comprenant une étape au cours de laquelle l'unité de pilotage (60) commande le premier moteur (8) et le deuxième moteur (10) de telle sorte que :
- le premier organe (40) a une vitesse de rotation constante,
- le deuxième organe (46) a une vitesse de rotation dont la valeur instantanée oscille autour d'une valeur moyenne.

17. Procédé selon la revendication 15 ou 16, l'unité de pilotage (60) étant apte à piloter le premier moteur (8) et le deuxième moteur (10) de telle sorte que le rapport entre la vitesse de rotation du premier organe (40) et la vitesse de rotation du deuxième organe (46) est réglable, le premier moteur (8) et le deuxième moteur (10) étant électriques, la machine (1) comprenant au moins un capteur (75) de mesure d'une grandeur représentative du couple fourni par au moins l'un des moteurs (8, 10) pour modifier la vitesse de rotation d'au moins l'un des organes d'entraînement (40, 46), le procédé comprenant les étapes suivantes :
- mesure par le capteur de mesure (75) d'une grandeur représentative du couple fourni par au moins l'un des moteurs (8, 10),
- comparaison de la valeur de la grandeur représentative par rapport à une valeur prédéterminée stockée dans l'unité de pilotage (60),
- modification de la vitesse de rotation d'au moins l'un des organes d'entraînement (40, 46) en fonction du résultat de la comparaison.

18. Procédé selon la revendication 17, dans lequel la grandeur représentative du couple est une intensité du courant électrique délivré au dit moteur (8, 10).

19. Procédé selon l'une quelconque des revendications 15 à 18, le procédé étant un procédé de perçage d'un alésage.

## Claims

1. Machining unit (1) of the type comprising:
- a casing (2),
- a tool holder spindle (4) running along an axis (A) and intended for holding a machining tool (30),
- a mechanism (12) for driving the tool holder spindle (4) comprising:
• a first element (40) for driving the spindle (4) rotationally about its axis (A) with respect to the casing (2) and
• a second element (46) for driving the spindle (4) in translational motion along its axis (A) with respect to the casing (2), the second driving element (46) being screwed to a threaded section of the spindle (4) so that the spindle (4) advances or goes back along its axis (A) in accordance with the relative rotational speed between the first element (40) and the second element (46),
- a first motor (8) connected to the driving mechanism (12) for turning the first driving element (40),
- a second motor (10) connected to the driving mechanism (12) for turning the second driving element (46) and
- a control unit (60) for controlling the first motor (8) and the second motor (10), the control unit (60) being suitable for controlling the first motor (8) and the second motor (10) in an independent manner in order to adjust the rotational speed of the first driving element (40) and the rotational speed of the second driving element (46) independently,
**characterised in that** the first motor (8) comprises a first output shaft (32) suitable for turning the first driving element (40) and the second motor (10) comprises a second output shaft (34) suitable for turning the second driving element (46) and in which the first shaft (32) and the second shaft (34) are fitted, one in the other.

2. Unit (1) according to claim 1, including a module (6) which comprises the first motor (8) and the second motor (10), the module (6) being fitted detachably to the casing (2).

3. Unit (1) according to claim 2, in which the module (6) comprises a releasable connection device with which the module (6) can be fitted to the casing (2) and the module (6) can be withdrawn.

4. Unit (1) according to claim 2 or 3, in which the module (6) is detachable from the casing (2) by simple translational motion.

5. Unit (1) according to any one of claims 2 to 4, in which the casing (2) comprises a radio frequency identification chip (110) and the module (6) comprises a system of remote identification (112) of the casing (2) by reading the radio frequency identification chip (110).

6. Unit (1) according to any one of the preceding claims, in which the control unit (60) is suitable for controlling the first motor (8) and the second motor (10) in such a way that the relationship between the rotational speed of the first element (40) and the rotational speed of the second element (46) is adjustable.

7. Unit (1) according to any one of the preceding claims, in which the first motor (8) and the second motor (10) are electric, the unit (1) comprising at least one sensor (75) for measuring a quantity representative of the torque supplied by at least one of the motors (8, 10) for altering the rotational speed of at least one of the driving elements (40, 46).

8. Unit (1) according to claim 7, in which the quantity representative of torque is a strength of the electric current delivered to the said motor (8, 10).

9. Unit (1) according to any one of the preceding claims, in which programmes for controlling the first motor (8) and second motor (10) are stored in the control unit (60), the programmes being adapted in order that the control unit (60) controls the rotation of the first motor (8) and of the second motor (10) in accordance with characteristics of the materials and/or of the machining to be carried out.

10. Unit (1) according to claim 7 or 8 taken together with claim 9, in which the programmes are adapted in order that the control unit (60) controls the rotation of the first motor (8) and of the second motor (10) to alter the rotational speed of at least one of the driving elements (40, 46) in accordance with a variation of the characteristic quantity.

11. Unit (1) according to any one of the preceding claims, in which the control unit (60) is suitable for controlling the first motor (8) and the second motor (10) in such a way that:
- the first element (40) has a constant rotational speed and
- the second element (46) has a rotational speed, the instantaneous value of which oscillates around a mean value.

12. Unit (1) according to any one of claims 6 to 10, in which the unit (1) is suitable for altering the rotational speed of at least one of the driving elements (40, 46) in accordance with the result of a comparison between a value of the quantity representative of the torque supplied by at least one of the motors (8, 10), and measured by the measurement sensor (75) with respect to a predetermined value stored in the control unit (60).

13. Unit (1) according to claim 12, in which the quantity representative of torque is a strength of the electric current delivered to the said motor.

14. Unit (1) according to any one of the preceding claims, the unit being a machine for forming a bore, the spindle (4) being intended for holding a bore-forming tool.

15. Machining process, **characterised in that** it is carried out by means of a unit (1) according to any one of the preceding claims.

16. Process according to claim 15, the process comprising a stage during which the control unit (60) controls the first motor (8) and the second motor (10) in such a way that:
- the first element (40) has a constant rotational speed and
- the second element (46) has a rotational speed, the instantaneous value of which oscillates around a mean value.

17. Process according to claim 15 or 16, the control unit (60) being suitable for controlling the first motor (8) and the second motor (10) in such a way that the relationship between the rotational speed of the first element (40) and the rotational speed of the second element (46) is adjustable, the first motor (8) and the second motor (10) being electric, the unit (1) comprising at least one sensor (75) for measuring a quantity representative of the torque supplied by at least one of the motors (8, 10) to alter the rotational speed of at least one of the driving elements (40, 46), the process comprising the following stages:
- measurement by the measurement sensor (75) of a quantity representative of the torque supplied by at least one of the motors (8, 10),
- comparison of the value of the representative quantity with a predetermined value stored in the control unit (60)
- alteration of the rotational speed of at least one of the driving elements (40, 46) in accordance with the result of the comparison.

18. Process according to claim 17, in which the quantity representative of torque is a strength of the electric current delivered to the said motor (8, 10).

19. Process according to any one of claims 15 to 18, the process being a process of forming a bore.

## Patentansprüche

1. Bearbeitungsmaschine (1), umfassend:
- ein Gehäuse (2),
- eine werkzeugtragende Spindel (4), die sich längs einer Achse (A) erstreckt und dazu bestimmt ist, ein Bearbeitungswerkzeug (30) zu tragen,
- einen Mechanismus (12) zum Antrieb der werkzeugtragenden Spindel (4), umfassend:
• ein erstes Organ (40) zum Drehantrieb der Spindel (4) um ihre Achse (A) bezüglich des Gehäuses (2),
• ein zweites Organ (46) zum Translationsantrieb der Spindel (4) längs ihrer Achse (A) bezüglich des Gehäuses (2), wobei das zweite Antriebsorgan (46) auf einen mit Gewinde versehenen Abschnitt der Spindel (4) aufgeschraubt ist, so dass die Spindel (4) sich längs ihrer Achse (A) in Abhängigkeit von der relativen Drehgeschwindigkeit zwischen dem ersten Organ (40) und dem zweiten Organ (46) vor- oder zurückbewegt,
- einen ersten Motor (8), der mit dem Antriebsmechanismus (12) verbunden ist, um das erste Antriebsorgan (40) in Drehung zu versetzen,
- einen zweiten Motor (10), der mit dem Antriebsmechanismus (12) verbunden ist, um das zweite Antriebsorgan (46) in Drehung zu versetzen,
- eine Steuereinheit (60) zum Steuern des ersten Motors (8) und des zweiten Motors (10), wobei die Steuereinheit (60) in der Lage ist, den ersten Motor (8) und den zweiten Motor (10) unabhängig zu steuern, um die Drehgeschwindigkeit des ersten Antriebsorgans (40) und die Drehgeschwindigkeit des zweiten Antriebsorgans (46) unabhängig einzustellen,
**dadurch gekennzeichnet, dass** der erste Motor (8) eine erste Austrittswelle (32) umfasst, die in der Lage ist, das erste Antriebsorgan (40) in Drehung zu versetzen, und der zweite Motor (10) eine zweite Austrittswelle (34) umfasst, die in der Lage ist, das zweite Antriebsorgan (46) in Drehung zu versetzen, und bei der die erste Welle (32) und die zweite Welle (34) ineinander gesteckt sind.

2. Maschine (1) nach Anspruch 1, umfassend ein Modul (6), das den ersten Motor (8) und den zweiten Motor (10) umfasst, wobei das Modul (6) auf dem Gehäuse (2) abnehmbar befestigt ist.

3. Maschine (1) nach Anspruch 2, bei der das Modul (6) eine freigebbare Verbindungsvorrichtung umfasst, die die Befestigung des Moduls (6) auf dem Gehäuse (2) sowie die Abnahme des Moduls (6) gestattet.

4. Maschine (1) nach Anspruch 2 oder 3, bei der das Modul (6) von dem Gehäuse (2) durch einfache Translation abnehmbar ist.

5. Maschine (1) nach einem der Ansprüche 2 bis 4, bei der das Gehäuse (2) einen Funkfrequenz-Identifizierungschip (110) umfasst und das Modul (6) ein System (112) zur Fernidentifizierung des Gehäuses (2) durch Lesen des Funkfrequenz-Identifizierungschips (110) umfasst.

6. Maschine (1) nach einem der vorhergehenden Ansprüche, bei der die Steuereinheit (60) in der Lage ist, den ersten Motor (8) und den zweiten Motor (10) so zu steuern, dass das Verhältnis zwischen der Drehgeschwindigkeit des ersten Organs (40) und der Drehgeschwindigkeit des zweiten Organs (56) verstellbar ist.

7. Maschine (1) nach einem der vorhergehenden Ansprüche, bei der er erste Motor (8) und der zweite Motor (10) Elektromotoren sind, wobei die Maschine (1) mindestens einen Fühler (75) zum Messen einer Größe umfasst, die für das von mindestens einem der Motoren (8, 10) gelieferte Drehmoment repräsentativ ist, um die Drehgeschwindigkeit mindestens eines der Antriebsorgane (40, 46) zu ändern.

8. Maschine (1) nach Anspruch 7, bei der die für das Drehmoment repräsentative Größe eine Stärke des dem Motor (8, 10) gelieferten elektrischen Stroms ist.

9. Maschine (1) nach einem der vorhergehenden Ansprüche, bei der Programme zur Steuerung des ersten Motors (8) und des zweiten Motors (10) in der Steuereinheit (60) gespeichert sind, wobei die Programme dafür ausgelegt sind, dass die Steuereinheit (60) die Drehung des ersten Motors (8) und des zweiten Motors (10) in Abhängigkeit von Merkmalen der Werkstoffe und/oder der durchzuführenden Bearbeitung steuert.

10. Maschine (1) nach Anspruch 7 oder 8 zusammen mit Anspruch 9, bei der die Programme dafür ausgelegt sind, dass die Steuereinheit (60) die Drehung des ersten Motors (8) und des zweiten Motors (10) steuert, um die Drehgeschwindigkeit mindestens eines der Antriebsorgane (40, 46) in Abhängigkeit von einer Änderung der charakteristischen Größe zu ändern.

11. Maschine (1) nach einem der vorhergehenden Ansprüche, bei der die Steuereinheit (60) dafür ausgelegt ist, den ersten Motor (8) und den zweiten Motor (10) so zu steuern, dass:
- das erste Organ (40) eine konstante Drehgeschwindigkeit hat,
- das zweite Organ (46) eine Drehgeschwindigkeit hat, deren momentaner Wert um einen Mittelwert schwankt.

12. Maschine (1) nach einem der Ansprüche 6 bis 10, bei der die Maschine (1) in der Lage ist, die Drehgeschwindigkeit mindestens eines der Antriebsorgane (40, 46) in Abhängigkeit von dem Ergebnis eines Vergleichs zwischen einem Wert der Größe, die für das von mindestens einem der Motoren (8, 10) gelieferte und von dem Messfühler (75) gemessene Drehmoment repräsentativ ist, und einem in der Speichereinheit (60) gespeicherten vorbestimmten Wert zu ändern.

13. Maschine (1) nach Anspruch 12, bei der die für das Drehmoment repräsentative Größe eine Stärke des dem Motor gelieferten elektrischen Stroms ist.

14. Maschine (1) nach einem der vorhergehenden Ansprüche, wobei die Maschine eine Maschine zum Bohren einer Bohrung ist, wobei die Spindel (4) dazu bestimmt ist, ein Werkzeug zum Bohren einer Bohrung zu tragen.

15. Bearbeitungsverfahren, **dadurch gekennzeichnet, dass** es mit Hilfe einer Maschine (1) nach einem der vorhergehenden Ansprüche durchgeführt wird.

16. Verfahren nach Anspruch 15, wobei das Verfahren einen Schritt umfasst, in dem die Steuereinheit (60) den ersten Motor (8) und den zweiten Motor (10) so steuert, dass:
- das erste Organ (40) eine konstante Drehgeschwindigkeit hat,
- das zweite Organ (46) eine Drehgeschwindigkeit hat, deren momentaner Wert um einen Mittelwert schwankt.

17. Verfahren nach Anspruch 15 oder 16, wobei die Steuereinheit (60) in der Lage ist, den ersten Motor (8) und den zweiten Motor (10) so zu steuern, dass das Verhältnis zwischen der Drehgeschwindigkeit des ersten Organs (40) und der Drehgeschwindigkeit des zweiten Organs (46) regelbar ist, wobei der erste Motor (8) und der zweite Motor (9) Elektromotoren sind, wobei die Maschine (1) mindestens einen Fühler (75) zum Messen einer Größe umfasst, die für das von mindestens einem der Motoren (8, 10) gelieferte Drehmoment repräsentativ ist, um die Drehgeschwindigkeit mindestens eines der Antriebsorgane (40, 46) zu ändern, wobei das Verfahren die folgenden Schritte umfasst:
- Messung einer Größe, die für das von mindestens einem der Motoren (8, 10) gelieferte Drehmoment repräsentativ ist, durch den Messfühler (75),
- Vergleich des Werts der repräsentativen Größe mit einem in der Steuereinheit (60) gespeicherten vorbestimmten Wert,
- Änderung der Drehgeschwindigkeit mindestens eines der Antriebsorgane (40, 46) in Abhängigkeit von dem Ergebnis des Vergleichs.

18. Verfahren nach Anspruch 17, bei dem die für das Drehmoment repräsentative Größe eine Stärke des dem Motor (8, 10) gelieferten elektrischen Stroms ist.

19. Verfahren nach einem der Ansprüche 15 bis 18, wobei das Verfahren ein Verfahren zum Bohren einer Bohrung ist.
